(19)

**Europäisches Patentamt**
**European Patent Office**
**Office européen des brevets**

(11) **EP 4 668 521 A1**

(12) **EUROPEAN PATENT APPLICATION**

(43) Date of publication:
24.12.2025 Bulletin 2025/52

(21) Application number: 24183316.9

(22) Date of filing: 20.06.2024

(51) International Patent Classification (IPC):
H02J 3/00 (2006.01)  H02J 3/38 (2006.01)

(52) Cooperative Patent Classification (CPC):
H02J 3/381; H02J 3/003; H02J 3/004;
H02J 2203/10; H02J 2203/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Hitachi Energy Ltd
8050 Zürich (CH)

(72) Inventors:
• SHIRSAT, Ashwin
Apex, North Carolina, 27502 (US)
• WANG, Zhenyuan
Apex, North Carolina, 27502 (US)

(74) Representative: Vossius & Partner
Patentanwälte Rechtsanwälte mbB
Siebertstrasse 3
81675 München (DE)

(54) **INTEGRATION OF MANAGEMENT SYSTEM WITH DISTRIBUTED ENERGY RESOURCE MANAGEMENT SYSTEM USING PROBABILISTIC OPTIMAL POWER FLOW**

(57) Distributed energy resources may be outside the control of a utility. While these distributed energy resources may be managed by distributed energy resource (DER) management systems, the DER management systems do not have knowledge of the overall power network to which the distributed energy resources are connected and do not have the same objective as the utility. Consequently, operation of the distributed energy resources by the DER management systems may result in network violations. Accordingly, disclosed embodiments integrate knowledge from the management system of the utility into the DER management systems using probabilistic optimal power flow to generate operating ranges that may be used in the DER dispatch of each DER management system. These operating ranges may be used to constrain the DER dispatch, to thereby ensure secure and safe operation of the overall power network, while requiring little to no modifications in the DER management systems.

FIG. 3

**Description**

**BACKGROUND**

Field of the Invention

The embodiments described herein are generally directed to the management of power systems, and, more particularly, to the integration of a management system, such as an advanced distribution management system, with one or more distributed energy resource management systems using probabilistic optimal power flow.

Description of the Related Art

A utility generally manages a distribution network of a power grid using an advanced distribution management system (ADMS). The advanced distribution management system is responsible for monitoring, controlling, and optimizing operation of the distribution network.

Edge devices on the power grid may draw electricity from the distribution network as well as inject electricity into the distribution network. An edge device may be privately owned or otherwise exist outside the direct control (i.e., "behind the meter") of the advanced distribution management system. One example of an edge device is a distributed energy resource (DER). A typical distributed energy resource (DER) utilizes renewable energy, which is associated with a high degree of uncertainty.

Distributed energy resources on the edge of the distribution network may be managed by a DER management system (DERMS). A DER management system enables real-time communication and control across distributed energy resources that are outside the direct control of the advanced distribution management system. A DER management system may optimize resource allocation for one or more distributed energy resources, according to its optimization goals.

The penetration of behind-the-meter distributed energy resources on distribution networks has increased the complexity of managing power flow on the distribution network. Furthermore, rapid electrification and new types of programs for load control have resulted in large fluctuations in electrical demand patterns, which makes the operation of distribution networks even more challenging. The uncertainty resulting from behind-the-meter distributed energy resources and the inability of the advanced distribution management system to control these behind-the-meter distributed energy resources jeopardizes the secure and optimized operation of the distribution network, especially in the face of these increasing fluctuations in energy demand.

In the state of the art, DER management systems are decoupled from the advanced distribution management system of the utility. For example, a DER management system generally has its own communication infrastructure for the distributed energy resource(s) that the DER management system manages, its own backend systems, and its own asset management engine and DER dispatch engine. As a result, a DER management system typically does not interface with operation planning at the advanced distribution management system. This prevents the advanced distribution management system from properly accounting for the uncertainties caused by the behind-the-meter distributed energy resources.

The disconnect between the DER management system(s) and the operating planning at the advanced distribution management system presents operational challenges to the utility (e.g., distribution system operator). In particular, the DER dispatch at the DER management system can potentially cause voltage violations (e.g., over/under voltage) or current violations in the distribution network, which are two key congestion indicators, as well as an increase in reverse power flows, outages, and/or the like. Such violations can require the utility to take emergency mitigation actions, which can be costly, impact the utility's operations and reliability metrics, result in fines and penalties, and/or the like. These unintended consequences are only expected to become more frequent as residential solar generation, battery storage, and loads from electric vehicle charging continue to increase.

Therefore, it would be advantageous to bridge the coordination gap between the advanced distribution management system and the DER management system(s). The present disclosure is directed towards this and other problems discovered by the inventors.

**SUMMARY**

In particular, systems, methods, and non-transitory computer-readable media are disclosed for the integration of a management system (e.g., ADMS) with one or more DER management systems using probabilistic optimal power flow (P-OPF) analysis. A first objective achievable by certain embodiments is to integrate information from the management system with at least one DER management system, to enable the DER management system to account for constraints on a power network, such that the power network can be operated more safely and securely, with little to no modification to the DER management system. A second objective achievable by certain embodiments is to model uncertainty streams that render traditional optimal power flow (OPF) analysis inadequate for renewable-energy-based distributed energy resources. A third objective achievable by certain embodiments is to enable these uncertainty streams to be modeled regardless of how much data are available.

In an embodiment, a method comprises using at least one hardware processor of a management system of a power network to: acquire distributed energy resource (DER) data for one or more distributed energy resources; execute a probabilistic optimal power flow (P-OPF) analysis on a model of the power network, based on at least the DER data and constrained by one or more constraints on operation of the power network, wherein the P-OPF analysis outputs an operating range for each of the one or more distributed energy resources; and send the operating range, output by the P-OPF analysis, for each of the one or more distributed energy resources to at least one DER management system that is external to the management system of the power network. The management system of the power network may be an advanced distribution management system. The power network may comprise a distribution network.

The P-OPF analysis may be executed using a plurality of scenarios, and the method may further comprise using the at least one hardware processor of the management system of the power network to: acquire relevant data for the power network, wherein the relevant data comprise one or more of network data, historical data, or forecast data; generate a joint probability distribution from the relevant data; and generate the plurality of scenarios based on the joint probability distribution. The joint probability distribution may be generated using parametric modeling of uncertainty. The joint probability distribution may be generated using non-parametric modeling of uncertainty in the relevant data. Generating the joint probability distribution may comprise applying correlation analysis to the relevant data.

The P-OPF analysis may be further based on network data, which identify a plurality of assets in the power network and one or more connections between the plurality of assets. The P-OPF analysis may be further based on one or more forecasted parameters. The one or more forecasted parameters may comprise one or both of at least one weather parameter or at least one load parameter. The DER data may be acquired from the at least one DER management system.

The method may further comprise using at least one hardware processor of the at least one DER management system to execute a DER dispatch for the one or more distributed energy resources based on the operating range, sent by the management system of the power network, for each of the one or more distributed energy resources, wherein the DER dispatch outputs one or more control parameters for each of the one or more distributed energy resources.

Executing the DER dispatch may comprise, for each of the one or more distributed energy resources, adding a constraint to the DER dispatch that constrains operation of that distributed energy resource to the operating range, sent by the management system of the power network, for that distributed energy resource. The method may further comprise using the at least one hardware processor of the at least one DER management system to control the one or more distributed energy resources according to the one or more control parameters output by the DER dispatch. The one or more control parameters may comprise a power generation setpoint for at least one of the one or more distributed energy resources, wherein controlling the at least one distributed energy resource comprises operating the at least one distributed energy resource according to the power generation setpoint.

The P-OPF analysis may optimize an objective function that represents congestion in the power network. The P-OPF analysis may optimize an objective function that represents overloading in the power network. The P-OPF analysis may optimize an objective function that represents one or both of over-voltage or under-voltage in the power network..

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example architecture for probabilistic optimal power flow (P-OPF) analysis and control, according to an embodiment;
FIG. 4 illustrates a graph of an operating range, output by P-OPF analysis for a distributed energy resource, overlaid with the actual dispatched power output of the distributed energy resource, according to an example;

FIG. 5 illustrates an example process for P-OPF analysis, representing operation of a management system according to an embodiment;

FIG. 6 illustrates an example process for DER dispatch, representing operation of a DER management system, according to an embodiment; and

FIG. 7 illustrates an example environment in which disclosed embodiments may operate, according to an embodiment.

## DETAILED DESCRIPTION

In an embodiment, systems, methods, and non-transitory computer-readable media are disclosed for the integration of a management system, such as an advanced distribution management system (ADMS), with one or more distributed energy resource management systems (DERMS) using probabilistic optimal power flow. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

1. Infrastructure

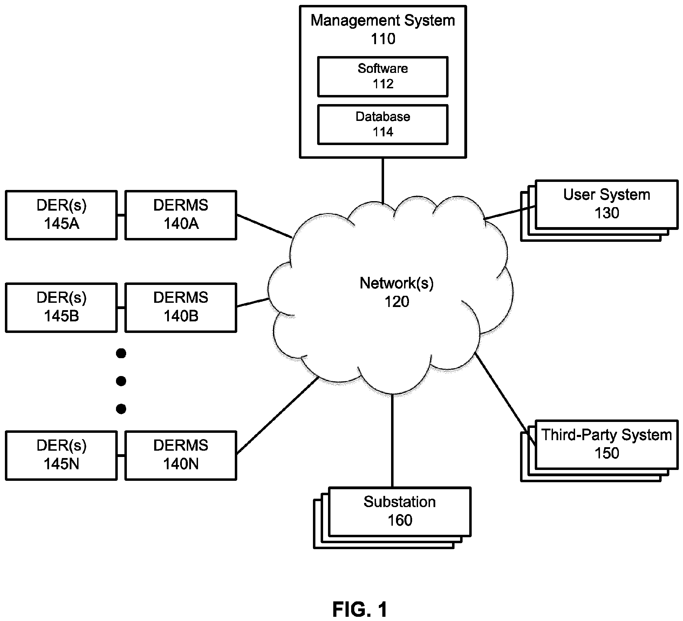

FIG. 1 illustrates an example infrastructure, in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and/or the like. While it is generally contemplated that management system 110 is an advanced distribution management system, this is not a requirement of any embodiment unless explicitly stated.

Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, DER management systems 140, third-party systems 150, and/or substations 160. In an alternative embodiment, management system 110 may be comprised within a substation 160.

Network(s) 120 may comprise the Internet, and management system 110 may communicate with user system(s) 130, DER management system(s) 140, third-party system(s) 150, and/or substations 160 through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), Institute of Electrical and Electronics Engineers (IEEE) Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, DER management systems 140, third-party systems 150, and/or substations 160 via the Internet, but may be connected to one or more other user systems 130, DER management systems 140, third-party systems 150, and/or substations 160 via an intranet. Furthermore, while only a few user systems 130, DER management systems 140, third-party systems 150, and substations 160, one instance of software 112, and one database 114 are illustrated, it should be understood that the infrastructure may comprise any number of user systems 130, DER management systems 140, third-party systems 150, substations 160, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of management system 110 or a DER management system 140 can interact with management system 110 or DER management system 140, respectively. These interactions may comprise inputting data (e.g., parameters for configuring one or more processes described herein) and/or receiving data (e.g., the outputs of one or more processes described herein) via a graphical user interface provided by management system 110 or DER management system 140, or a system between management system 110 or DER management system 140 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114 of management system 110 or a local database of DER management system 140.

Management system 110 communicates, via network(s) 120, with one or more DER management systems 140. Each DER management system 140 may manage one or more distributed energy resources 145. For example, DER management system 140A manages a set of one or more distributed energy resources 145A, DER management system 140B manages another set of one or more distributed energy resources 145B, and DER management system 140N manages another set of one or more distributed energy resources 145N. It should be understood that management system 110 may communicate with any number N of DER management systems 140, including only a single DER management system 140 or any plurality of DER management systems 140.

As used herein, a reference numeral with an appended letter will be used to refer to a specific component, whereas the same reference numeral without any appended letter will be used to refer collectively to a plurality of the component or to refer to a generic or arbitrary instance of the component. Thus, for example, the term "DER management system 140" may refer to any arbitrary one of DER management systems 140A, 140B, and 140N, and the term "DER management systems 140" may refer collectively to any arbitrary set of two or more, including potentially all, of DER management systems 140A, 140B, and 140N.

Each set of distributed energy resources 145 may comprise one or more power contributors, which generate, inject, or otherwise contribute electrical energy to the power network being managed by management system 110, and/or one or more power consumers, which consume electrical energy from the power network being managed by management system 110. Each distributed energy resource 145 may be electrically connected to the power network at a flexible asset connection point (FACP). A flexible asset connection point may connect one or more distributed energy resources 145 to the power network. However, for ease of description, the term "distributed energy resource 145" should be understood to potentially include a flexible asset connection point. Examples of power contributors include power generators and energy storage systems. Power generators may comprise different types of power generators, such as thermal power plants (e.g., coal, natural gas, nuclear, geothermal, etc.), hydroelectric power plants, renewable-resource power plants (e.g., photovoltaic, wind, geothermal, etc.), diesel generators, and/or the like, and may be stationary or mobile. Energy storage systems may comprise a battery energy storage system (BESS), and may also be stationary or mobile. Examples of power consumers include any electrical load that consumes power, including, without limitation, electric vehicles, appliances, machines, commercial buildings, residential buildings, hospitals, police stations, fire stations, gas network pumps, water systems, rechargeable energy storage systems, and/or the like.

Third-party system(s) 150 may comprise any type or types of computing devices capable of wired and/or wireless communication. However, it is generally contemplated that third-party system 150 would comprise one or more servers that supply extrinsic data to management system 100. The extrinsic data may represent historical, current, and/or forecasted values of one or more parameters that are relevant to the power network, including distributed energy resources 145 and any other components of the power network. Examples of relevant parameters, include, without limitation, weather parameters (e.g., temperature, humidity, wind speed, pressure, etc.), market parameters (e.g., energy prices), socio-political events (e.g., protests, law-enforcement warnings, etc.), and/or the like.

Management system 110 may communicate, via network(s) 120, with one or more substations 160 of a power network being managed by management system 110. Alternatively, management system 110 may reside within a substation 160. Each substation 160 may comprise electrical equipment for transforming voltages, switching generators, lines, circuits, or other components of the power network in and out, and/or the like. It should be understood that the power network may comprise or consist of a transmission network, comprise or consist of a distribution network, or comprise or consist of both a transmission network and a distribution network.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL™, Oracle™, IBM™, Microsoft SQL™, Access™, PostgreSQL™, MongoDB™, and/or the like, and including cloud-based databases, proprietary databases, and unstructured databases. Similarly, DER management system(s) 140 may execute software, comprising one or more software modules that implement one or more of the disclosed processes, and comprise, be communicatively coupled with, or otherwise have access to a local database that stores the data input into and/or output from one or more of the disclosed processes.

2. Example Processing System

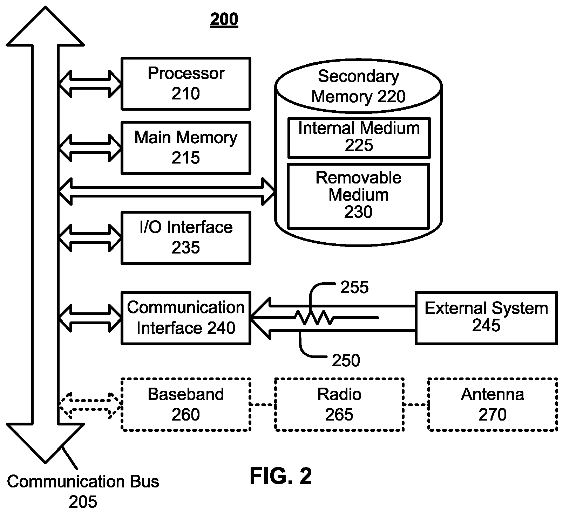

FIG. 2 illustrates an example processing system 200, by which any of the processes described herein may be executed, according to an embodiment. For example, system 200 may be used as or in conjunction with one or more of the functions, methods, or software (e.g., to store and/or execute software 112, store database 114, etc.) described herein, and may represent components of management system 110, user system(s) 130, DER management system(s) 140, third-party system(s) 150, substation(s) 160, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor. Examples of processors 210 which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including, without limitation, C/C++, Java, JavaScript, Perl, Python, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Examples of input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer programs, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within distributed energy resources 145, etc.). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

### 3. Example Architecture

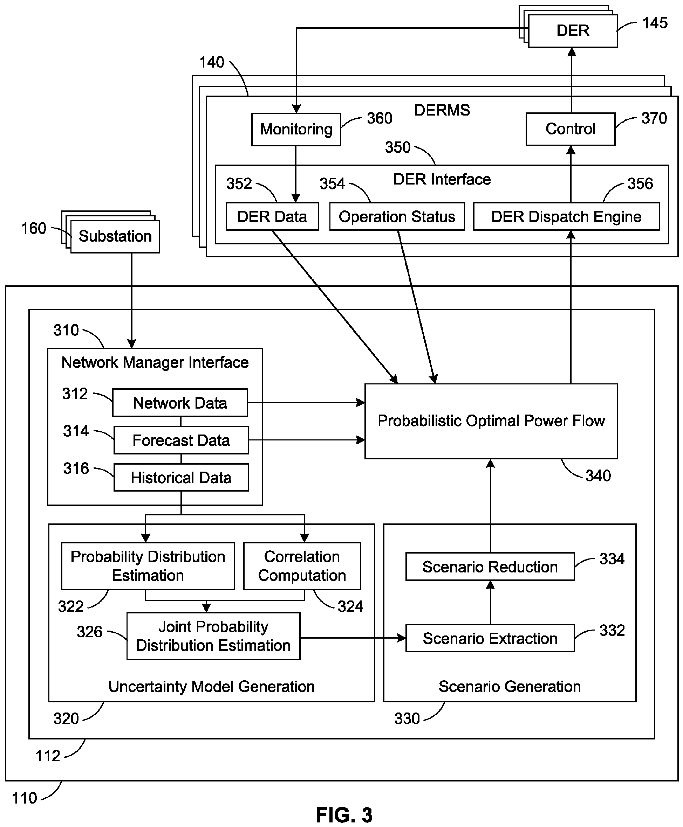

FIG. 3 illustrates an example architecture for probabilistic optimal power flow (P-OPF) analysis and control, according to an embodiment. Software 112 of management system 110 may comprise a network manager interface 310, uncertainty model generation module 320, scenario generation module 330, and/or P-OPF module 340. In addition, each DER management system 140 may comprise a DER interface 350, monitoring module 360, and/or control module 370.

P-OPF module 340 may communicate with each DER management system 140 via DER interface 350 of the respective DER management system 140, and each DER management system 140 may communicate with one or more distributed energy resources 145. Any of the communications between different systems, such as management system 110, DER management system(s) 140, and DER(s) 145, may be performed via network(s) 120, and any communications between a pair of modules may be performed via an application programming interface (API) provided by one of the modules or by other inter-process communication means. For example, P-OPF module 340 may pull data from DER interface 350 and/or push data to DER interface 350 via an API of DER interface 350, and/or DER interface 350 may push data to P-OPF module 340 and/or pull data from P-OPF module 340 via an API of P-OPF module 340. Similarly, monitoring module 360 may pull data from distributed energy resource(s) 145 and/or control module 370 may push data to distributed energy resource(s) 145 via an API of each distributed energy resource 145, and/or each distributed energy resource 145 may push data to monitoring module 360 and/or pull data from control module 370 via an API of DER management system 140.

Network manager interface 310 may acquire relevant data, for the power network being managed by management system 110, from one or a plurality of data sources. The relevant data may comprise or consist of network data 312, forecast data 314, and/or historical data 316. It should be understood that these types of data are provided as examples, and that the relevant data may comprise other types of data than those specifically mentioned, in addition to or instead of one or more of the mentioned types of data.

Network manager interface 310 may acquire network data 312 from an internal data source and/or substation(s) 160 of the power network. Network data 312 may comprise grid and connectivity data, which identify a plurality of assets in the power network and one or more connections between the plurality of assets. Network data 312 may also comprise status data, which indicate the status of one or more of the plurality of assets in the power network.

Network manager interface 310 may acquire forecast data 314 from an internal data source and/or one or more third-party systems 150. Forecast data 314 may comprise one or more forecasted parameters. Examples of forecasted parameters include, without limitation, weather parameters, load parameters, market parameters, and the like. Forecasted weather parameters may include, for example, temperature, humidity, solar insolation, wind, barometric pressure, precipitation, and/or the like, predicted for a single future time point or over a future time period comprising a plurality of future time points or future time intervals. Forecasted weather parameters may be acquired, for example, from a third-party system 150 that implements a weather service, such as the United States National Weather Service. Forecasted load parameters may include, for example, a forecasted load on the power network, predicted for a single future time point or over a future time period. Forecasted load parameters may be derived (e.g., predicted), for example, from forecasted weather parameters, historical data 316, and/or the like. Forecasted market parameters may include, for example, a price of energy, a price of ancillary services, and/or the like, predicted for a future time point or over a future time period. Forecasted market parameters may be acquired, for example, from a third-party system 150 that implements or monitors an energy and/or ancillary services market, or be derived from a current energy price, historical energy prices, forecasted weather parameters, forecasted load parameters, and/or the like.

Network management interface 310 may acquire historical data 316 from database 114. In particular, historical data may comprise network data 312 over one or more past time periods. As network management interface 310 acquires new network data 312, this network data 312 may be stored in database 114, such that the stored network data 312 becomes historical data 316. It should be understood that, over time, a significant amount of historical data 316 may be acquired in this manner.

Uncertainty model generation module 320 estimates a joint probability distribution, which models uncertainty in the load demand and renewable generation of the power network, from the relevant data that were acquired by network manager interface 310. In an embodiment, uncertainty model generation module 320 comprises a probability distribution estimation module 322, correlation computation module 324, and/or joint probability distribution estimation module 326. The relevant data may comprise one or a plurality of uncertainty streams. In an embodiment, the modeling of uncertainty accounts for the number of uncertainty streams, correlations between different uncertainty streams, and the bounds of uncertainty for each uncertainty stream. An uncertainty stream may be, for example, a type of distributed energy resource, such as a type of power generator (e.g., solar, wind, geothermal, hydroelectric, etc.), a type of load, and the like.

Probability distribution estimation module 322 may mathematically model each individual uncertainty stream using one of two approaches: parametric modeling; or non-parametric modeling. Typically, non-parametric modeling is preferred. However, in certain cases, there may not be a sufficient amount of relevant data to estimate a probability distribution using non-parametric modeling. In these cases, parametric modeling may be used. In other words, when a sufficient amount of relevant data (e.g., equal to or greater than a threshold amount) are available for a given uncertainty stream, non-parametric modeling may be used to mathematically model that uncertainty stream. Otherwise, when an insufficient amount of relevant data (e.g., less than the threshold amount) are available for a given uncertainty stream, parametric modeling may be used to mathematically model that uncertainty stream.

As mentioned above, when an insufficient amount of relevant data are available for a given uncertainty stream, probability distribution estimation module 322 may estimate a probability distribution for that uncertainty stream utilizing parametric modeling. In some cases, parametric modeling may be characterized as a partially data-driven approach. The underlying assumption of parametric modeling is that the sample data come from a population of data that can be adequately modeled by a probability distribution that has a fixed set of parameters. The particular probability distribution that is output by probability distribution estimation module 322 for a given uncertainty stream being modeled may depend upon the uncertainty stream. For example, for photovoltaic generation, probability distribution estimation module 322 may select the beta distribution as the structure of the probability distribution. As another example, for wind generation, probability distribution estimation module 322 may select the Weibull distribution as the structure of the probability distribution. Once the structure of the probability distribution has been selected, probability distribution estimation module 322 may estimate the parameters of the selected structure using whatever relevant data are available, if any, and output the parametric probability distribution as the estimated probability distribution for the given uncertainty stream. Suitable algorithms for estimating the parameters of the selected probability distribution include, without limitation, logistic regression, maximum likelihood estimation, generalized methods of moments, least squares method, and the like.

On the other hand, when a sufficient amount of relevant data are available for a given uncertainty stream, probability distribution estimation module 322 may estimate a probability distribution for that uncertainty stream utilizing non-parametric modeling. Non-parametric modeling may be characterized as a fully data-driven approach. Non-parametric modeling relies on fewer assumptions than parametric modeling, but typically requires mild assumptions, such as continuity or presence of specific moments. In non-parametric modeling, the structure of the probability distribution is not specified a priori. Rather, the structure is determined dynamically from the distribution of the relevant data. Suitable algorithms for estimating the probability distribution include, without limitation, histograms, kernel density estimation, non-parametric regression, support vector machines, and the like.

Probability distribution estimation module 322 may output an individual estimated probability distribution for each uncertainty stream in the relevant data to joint probability distribution estimation module 326. It should be understood that the estimated probability distributions for two different uncertainty streams will typically differ from each other in terms of structure (e.g., regardless of whether parametric or non-parametric modeling was used) and/or parameters (e.g., in the case that parametric modeling was used). Each estimated probability distribution for each uncertainty stream may comprise a probability distribution of a value of a load on the power network and the corresponding power generation (e.g., of the type corresponding to the uncertainty stream) for that load.

Once the probability distributions have been estimated for all uncertainty streams by probability distribution estimation module 322, correlation computation module 324 may apply correlation analysis to the relevant data to identify inherent correlations between the different uncertainty streams. For example, load demand and photovoltaic generation typically exhibit some degree of correlation. This is because high photovoltaic generation is an indication of a clear and sunny day, which may result in increased electricity demand for cooling systems in some geographical regions (but not in other geographical regions). The correlation analysis of correlation computation module 324 may comprise analyzing historical data 316 to compute the correlation coefficients between pairs of uncertainty streams. These correlation coefficients, computed by the correlation analysis, may be output to joint probability distribution estimation module 326.

Joint probability distribution estimation module 326 may generate a joint probability distribution based on the estimated probability distribution, output by probability distribution estimation module 322, for each uncertainty stream, and the correlation coefficients, output by correlation computation module 324, for one or more pairs of uncertainty streams. Suitable algorithms for generating the joint probability distribution from these inputs include, without limitation, copula theory, multivariate kernel density estimation, and the like. Joint probability distribution estimation module 326 may output the joint probability distribution to scenario generation module 330.

Scenario generation module 330 may generate a plurality of scenarios, based on the joint probability distribution that was output by joint probability distribution estimation module 326. Each scenario may comprise one or more generation and/or load parameters and a probability of occurrence of the scenario. In an embodiment, scenario generation module 330 comprises a scenario extraction module 332, and a scenario reduction module 334. Scenario extraction module 332 may extract a plurality of scenarios from the joint probability distribution, for example, by randomly sampling different scenarios from joint probability distribution. Scenario reduction module 334 may reduce the number of scenarios, output by scenario extraction module 332, to a static or dynamic limit, in order to keep the optimization problem tractable. For example, scenario extraction module 332 may produce millions of scenarios, and scenario reduction module 334 may reduce the number of scenarios so as not to exceed a maximum number (e.g., a hundred, a few hundred, a thousand, a few thousand, etc.). The reduction in the number of scenarios may be performed in any suitable manner, including, for instance, by removing similar scenarios, removing scenarios with low probabilities (e.g., the probability of occurrence is below a threshold), performing a Monte Carlo simulation, and/or the like. In any case, scenario generation module 330 may output the generated plurality of scenarios to P-OPF module 340.

While it is important that the scenarios cover a realistic solution space, the P-OPF analysis must generally performed in a limited time frame. Thus, the maximum number of scenarios to be utilized by scenario reduction module 334 may be determined so as to ensure that the P-OPF analysis can be completed within the limited time frame. For example, the P-OPF analysis typically targets a sliding future time window representing a future time period comprising one or more future time points. The time frame, which may be equal to or less than the time step for the sliding future time window, may be determined according to the frequency with which DER management system 140 sends dispatch signals. As the length of the time frame increases (i.e., the time resolution decreases), the maximum number of scenarios may increase. Conversely, as the length of the time frame decreases (i.e., the time resolution increases), the maximum number of scenarios may need to decrease, in order to reduce the computational time required for P-OPF module 340 to perform the P-OPF analysis, so that the computational time fits within the reduced time frame.

Optimal power flow (OPF) analysis was first introduced in J. Carpentier, "Contribution a l'etude du dispatching economique," Soc. Francaise des Electriciens, 1962, which is hereby incorporated herein by reference as if set forth in full. OPF analysis may be used to economically dispatch the generators on a power network in a manner that adheres to the network operating constraints. Probabilistic power flow (P-PF) analysis was first proposed in B. Borkowska, "Probabilistic Load Flow," IEEE Transactions on Power Apparatus and Systems, 1974, which is hereby incorporated herein by reference as if set forth in full. P-PF analysis is an effective approach for analyzing the influence of stochastic factors on the operation of a power system, in order to perform a comprehensive and accurate evaluation of the operation status of the power system. Disclosed embodiments merge OPF analysis and P-PF analysis into P-OPF analysis, which has the objective of producing probabilistic economic dispatch decisions for DER management system 140 by accounting for the influence of stochastic factors on the operation of a power system.

P-OPF module 340 executes a P-OPF analysis on a model of the power network being managed by management system 110, using the plurality of scenarios generated by scenario generation module 330. The model of the power network, which may be stored as a data structure in database 114 and accessed by P-OPF module 340 via any known means (e.g., via an API of database 114, a direct query of database 114, etc.), may model the power network (e.g., distribution network) and any distributed energy resources 145 that are connected to the power network. The use of the plurality of scenarios enables the P-OPF analysis to be probabilistic and account for the uncertainty in optimal decision-making. The P-OPF analysis may be based on DER data 352, operation status 354, network data 312, forecast data 314, and/or the like. DER data 352 and/or operation status 354 may be acquired from DER management system 140, whereas network data 312 and/or forecast data 314 may be acquired from network manager interface 310. The P-OPF analysis may comprise stochastic optimization, robust optimization, chance-constrained optimization, hybrid robust-stochastic optimization, or the like. The disclosed approach is flexible in terms of the type of distribution network, the distribution operating model, the P-OPF modeling specification, and the like.

During execution, the P-OPF analysis is constrained by one or more constraints on operation of the power network. For example, these network constraints may be derived from network data 312 and may be designed to prevent violations (e.g., voltage violations) during the operation of the power network. The constraints may include typical OPF constraints, with the inclusion of constraints representing uncertainty stemming from load demand and renewable energy generation. The P-OPF analysis may be extended to accommodate additional uncertainties, such as potential operating contingencies.

The output of the P-OPF analysis may be an operating range for each distributed energy resource 145 or flexible asset connection point (e.g., connecting one or more distributed energy resources 145 to the distribution network) being managed by each DER management system 140, for a future time point or a future time period. The operating range may be defined by a minimum and maximum value of either power contribution or power consumption, depending on whether the distributed energy resource 145 is a power contributor or power consumer. In the event that the P-OPF analysis is performed for a sliding future time window, the P-OPF analysis may output an operating range at each time point in the future time window that is currently being predicted. In other words, the time resolution for the P-OPF analysis may be set according to the frequency with which DER management system 140 sends dispatch signals.

Each operating range, output by P-OPF analysis, may represent a safe operating range of the respective distributed energy resource 145. The operating range may be a range in the value of the power output by the respective distributed energy resource 145 (e.g., the value of a power generation setpoint) or consumed by the respective distributed energy resource 145. Typically, the safe operating range will be the range within which the respective distributed energy resource 145 may inject power into or withdraw power from the power network with minimum impact on operation of the power network. It should be understood that the operating range may comprise a suggested value of power contribution or consumption with a range of deviation above and below the suggested value.

In an embodiment, the P-OPF analysis may also output a list of the most sensitive distributed energy resources 145, in addition to the operating ranges. The sensitivity of each distributed energy resource 145 may be measured according to any suitable metric. For instance, a sensitivity metric may be calculated for each distributed energy resource 145, and either a predefined number of the distributed energy resources 145 with the highest value of the sensitivity metric or all distributed energy resources 145 having a value of the sensitivity metric that is greater than or equal to a predefined threshold may be included in the list.

In an embodiment, the P-OPF analysis, executed by P-OPF module 340, optimizes one or a plurality of objective functions. A first objective function may represent congestion in the power network being managed by management system 110. A second objective function may represent overloading in the power network being managed by management system 110. A third objective function may represent one or both of over-voltage or under-voltage in the power network being managed by management system 110. A fourth objective function may represent the operating cost of the power network being managed by management system 110. In each of these examples, the P-OPF analysis optimizes the objective function by minimizing the objective function. Alternatively, the P-OPF analysis could optimize an objective function by maximizing the objective function. The P-OPF analysis may optimize a single one of these objective functions, any combination of these objective functions, including potentially all of these objective functions, one or any combination of these objective functions with one or more other objective functions, or only one or more other objective functions.

One non-limiting example of the P-OPF analysis will now be described, in which a scenario-based P-OPF analysis minimizes a single objective function representing the operating cost of the power network. A skilled person in the art will understand how to modify the P-OPF analysis for a different objective function or set of multiple objective functions. In this example, the P-OPF problem may be expressed as:

$$f = \min[\sum_{s\in\Omega} \rho_s \sum_{t\in T} \sum_{i\in N_{DER}} a_i + b_i P^G_{i,t,s} + a_i P^{G}_{i,t,s}{}^2]$$

subject to the following constraints:

(1)

$$P^G_{i,t,s} - P^D_{i,t,s} = \sum_{j\in N_{i-Out}} P_{ij,t,s} - \sum_{j\in N_{i-In}} P_{ij,t,s} \;\forall i \in N_{DER} \cup N_{Sub}, \forall\, ij \in E_s, \;\forall t \in T, \;\forall s \in \Omega$$

(2)

$$Q^G_{i,t,s} - Q^D_{i,t,s} = \sum_{j\in N_{i-Out}} Q_{ij,t,s} - \sum_{j\in N_{i-In}} Q_{ij,t,s} \;\forall i \in N_{DER} \cup N_{Sub}, \;\forall\, ij \in E_s, \forall t \in T, \forall s \in \Omega$$

(3)

$$-P^D_{i,t,s} = \sum_{j\in N_{i-Out}} P_{ij,t,s} - \sum_{j\in N_{i-In}} P_{ij,t,s} \;\forall i \in N\backslash N_{DER}\backslash N_{Sub}, \;\forall\, ij \in E_s, \forall t \in T, \forall s \in \Omega$$

(4)

$$-Q^D_{i,t,s} = \sum_{j\in N_{i-Out}} Q_{ij,t,s} - \sum_{j\in N_{i-In}} Q_{ij,t,s} \;\forall i \in N\backslash N_{DER}\backslash N_{Sub}, \;\forall\, ij \in E_s, \forall t \in T, \forall s \in \Omega$$

(5)

$$-\bar{P}_{ij} \leq\; P_{ij,t,s} \leq \bar{P}_{ij} \quad \forall ij \in E_s, \forall t \in T, \forall s \in \Omega$$

(6)

$$-\bar{Q}_{ij} \leq\; Q_{ij,t,s} \leq \bar{Q}_{ij} \quad \forall ij \in E_s, \forall t \in T, \forall s \in \Omega$$

(7)

$$V_{i,t,s} =\; V_{j,t,s}\; + A_{ij} P_{ij,t,s} + B_{ij} Q_{ij,t,s} \quad \forall ij \in E_s, \; i \in N, \forall t \in T, \forall s \in \Omega$$

(8)

$$\underline{V}^2 \leq V_{i,t,s} \leq \bar{V}^2 \quad \forall i \in N, \forall t \in T, \forall s \in \Omega$$

(9)

$$V_{i,t,s} = V_{ref} \quad \forall i \in N_{Sub}, \forall t \in T, \forall s \in \Omega$$

(10)

$$A_{ij} = \begin{bmatrix} -2r_{ij}^{aa} & r_{ij}^{ab} - \sqrt{3}x_{ij}^{ab} & r_{ij}^{ac} + \sqrt{3}x_{ij}^{ac} \\ r_{ij}^{ab} + \sqrt{3}x_{ij}^{ab} & -2r_{ij}^{bb} & r_{ij}^{bc} - \sqrt{3}x_{ij}^{bc} \\ r_{ij}^{ac} - \sqrt{3}x_{ij}^{ac} & r_{ij}^{bc} + \sqrt{3}x_{ij}^{bc} & -2r_{ij}^{cc} \end{bmatrix}$$

(11)

$$B_{ij} = \begin{bmatrix} -2x_{ij}^{aa} & x_{ij}^{ab} + \sqrt{3}r_{ij}^{ab} & x_{ij}^{ac} - \sqrt{3}r_{ij}^{ac} \\ x_{ij}^{ab} - \sqrt{3}r_{ij}^{ab} & -2x_{ij}^{bb} & x_{ij}^{bc} + \sqrt{3}r_{ij}^{bc} \\ x_{ij}^{ac} + \sqrt{3}r_{ij}^{ac} & x_{ij}^{bc} - \sqrt{3}r_{ij}^{bc} & -2x_{ij}^{cc} \end{bmatrix}$$

(12)

$$\underline{P}_{i,t,s}^{D} \leq P_{i,t,s}^{D} \leq \bar{P}_{i,t,s}^{D} \qquad \forall i \in N, \forall t \in T, \forall s \in \Omega$$

(13)

$$\underline{Q}_{i,t,s}^{D} \leq Q_{i,t,s}^{D} \leq \bar{Q}_{i,t,s}^{D} \qquad \forall i \in N, \forall t \in T, \forall s \in \Omega$$

(14)

$$\underline{P}_{i,t,s}^{G} \leq P_{i,t,s}^{G} \leq \bar{P}_{i,t,s}^{G} \qquad \forall i \in N_{DER}, \forall t \in T, \forall s \in \Omega$$

(15)

$$\underline{Q}_{i,t,s}^{G} \leq Q_{i,t,s}^{G} \leq \bar{Q}_{i,t,s}^{G} \qquad \forall i \in N_{DER}, \forall t \in T, \forall s \in \Omega$$

wherein:

| Set | Description |
|---|---|
| $\Omega$ | Set of scenarios generated by scenario generation module 330 |
| $T$ | Set of time intervals |
| $N$ | Set of nodes in the power network |
| $E$ | Set of lines (edges) in the power network |
| $N_{i\text{-}out}$ | Set of nodes connecting branches that originate from node $i \in N$. |
| $N_{i\text{-}In}$ | Set of nodes connecting branches that terminate into node $i \in N$. |
| $N_{Sub}$ | Set of all substations 160 |
| $N_{DER}$ | Set of all types of DERs 145 managed by DER management system 140 |

| Parameter | Description |
|---|---|
| $\rho_s$ | Probability of scenario s |
| $\bar{P}_{ij}$ | Power flow limit of real power load (e.g., in kilowatts (kW)) for lines connecting nodes $i$ and $j$ |

(continued)

| Parameter | Description |
|---|---|
| $Q_{ij}$ | Power flow limit of reactive power load (e.g., in kilovolt-amperes reactive (kVAr)) for lines connecting nodes $i$ and $j$ |
| $A_{ij}$ | Linearization matrix for computing the voltage drop in real power on the line connecting nodes $i$ and $j$ |
| $B_{ij}$ | Linearization matrix for computing the voltage drop in reactive power on the line connecting nodes $i$ and $j$ |
| $\underline{V}$ | Minimum limit (e.g., in per unit (p.u.)) for node voltage |
| $\overline{V}$ | Maximum limit (e.g., in p.u.) for node voltage |
| $V_{ref}$ | Reference voltage (e.g., in p.u.) for a node representing a substation 160 |
| $\bar{P}^D_{i,t}$ | Forecasted real power load (e.g., in kW) for node $i$ in time interval $t$ |
|  | Forecasted reactive power load (e.g., in kVAr) for node $i$ in time interval $t$ |
| $\underline{P}^D_{i,t,s}$ | Minimum value of real power (e.g., in kW) that must be supplied to node $i$ in time interval $t$ for scenario s |
| $\underline{Q}^D_{i,t,s}$   $\underline{Q}^D_{i,t,s}$ | Minimum value of reactive power (e.g., in kVAr) that must be supplied to node $i$ in time interval $t$ for scenario s |

| Variable | Type | Description |
|---|---|---|
| $P^D_{i,t,s}$ | Continuous, positive reals | Real power supply (e.g., kW) at node $i$ in time interval $t$ for scenario $s$ |
| $Q^D_{i,t,s}$ | Continuous, positive reals | Reactive power supply (e.g., in kVAr) at node $i$ in time interval $t$ for scenario $s$ |
| $P_{ij,t,s}$ | Continuous, reals | Real power flow (e.g., in kW) on the line connecting nodes $i$ and $j$ in time interval $t$ for scenario $s$ |
| $Q_{ij,t,s}$ | Continuous, reals | Reactive power flow (e.g., in kVAr) on the line connecting nodes $i$ and $j$ in time interval $t$ for scenario $s$ |
| $P^G_{i,t,s}$ | Continuous, reals | Real power output (e.g., kW) of DER(s) 145 at node $i$ in time interval $t$ for scenario $s$ |
| $Q^G_{i,t,s}$ | Continuous, reals | Reactive power output (e.g., in kVAr) of DER(s) 145 at node $i$ in time interval $t$ for scenario $s$ |
| $V_{i,t,s}$ | Continuous, positive reals | Squared node voltage (e.g., in p.u.) at node $i$ in time interval $t$ for scenario $s$ |
| $\varepsilon_{ij,s}$ | Continuous, positive reals | Slack variable to capture voltage difference between disconnected nodes $i$ and $j$ for scenario $s$ |

The above constraints utilize the linearized bus injection method for modeling the power flow constraint. In an alternative embodiment, more detailed constraints can be utilized, depending on the requirements of the particular application. In addition, constraints on distributed energy resources 145 (e.g., communicated in DER data 352) and/or DER management system 140 (e.g., communicated in operation status 354) may be added to the above constraints when performing the P-OPF analysis. Notably, constraints (12) and (13) enable the P-OPF analysis to compute the amount of load that needs to be supplied and the amount of load that needs to be curtailed. However, if demand response is out of the scope of the P-OPF analysis, constraints (12) and (13) may be omitted from the P-OPF analysis.

The above example of the P-OPF analysis utilizes a single objective function. As discussed elsewhere herein, the P-OPF analysis may comprise a different objective function or a plurality of different objective functions, in addition to or instead of the illustrated objective function. Regardless of whether the P-OPF analysis comprises one or a plurality of objective functions, the objective function(s) may be trained in any suitable manner. For example, the objective function(s) may be trained using supervised learning to minimize an error between the output of the objective function(s) and a target output. In this case, a dataset may be generated that comprises a plurality of feature vectors that are each labeled with a target output. Each feature vector may comprise the values of all inputs to the objective function(s). Over each of many iterations, one of these feature vectors may be input into the objective function(s), the error between the output of the objective function(s) and the target output for that feature vector may be calculated according to a loss function, and the weights in the objective function(s) may be adjusted according to any suitable technique (e.g., gradient descent) to minimize the error.

As mentioned above, the solution of the P-OPF analysis, which is the output of P-OPF module 340, comprises an operating range for each of one or more distributed energy resources 145 and for each of one or more future time points representing time intervals. In addition, the solution may comprise a list of the most sensitive distributed energy resources 145. Since a scenario-based approach is used for modeling the uncertainty streams in the relevant data, the output of P-OPF module 340 will represent an expectation of the safe operating range over all scenario-specific variables. For instance, as can be seen in constraints (14) and (15), the variable representing power output of each distributed energy resource 145 is indexed over the set of scenarios $\Omega$. This means that the power output for each distributed energy resource 145 for each scenario s will take on a unique value that is specific to that scenario s, based on the uncertainty values for that scenario s. The total count of scenario-specific optimal power output values for each distributed energy resource 145 will be equal to the total number of scenarios s in the set of scenarios $\Omega$. Once P-OPF module 340 has computed all of the scenario-specific values of power output for a given distributed energy resource 145, these scenario-specific values can be processed to obtain the minimum scenario-specific value and the maximum scenario-specific value, which represent the lower bound of the operating range and the upper bound of the operating range, respectively. For each DER management system 140, P-OPF module 340 computes this operating range for each distributed energy resource 145 managed by that DER management system 140, and management system 110 sends the operating range, output by the P-OPF analysis, for each of the distributed energy resource(s) 145 to the respective DER management system 140. It should be understood that each DER management system 140 may be external to management system 110 and outside the control of management system 110.

Each DER management system 140 may comprise a DER interface 350, which acquires DER data 352 and operation status 354. DER data 352 may be acquired from a monitoring module 360 of DER management system 140. Monitoring module 360 may monitor and collect data, output by one or more sensors that each measures a parameter of at least one distributed energy resource 145. DER data 352 may comprise or consist of the data collected by monitoring module 360 and/or data computed or otherwise derived from the data collected by monitoring module 360. DER data 352 may comprise information about each distributed energy resource 145 that is being managed by DER management system 140, including, for example, the operational status of each distributed energy resource 145, the current power output of each distributed energy resource 145, the type of power generation of each distributed energy resource 145 that is a power generator, one or more constraints on the operation of one or more distributed energy resources 145, and/or the like. Operation status 354 may be acquired from one or more subsystems of DER management system 140. Operation status 354 may comprise information about DER management system 140, including, for example, the operational status of DER management system 140, one or more constraints on the operation of DER management system 140, and/or the like.

DER interface 350 of each DER management system 140 may also comprise a DER dispatch engine 356. P-OPF module 340 may output the operating range(s), computed by the P-OPF analysis, to DER dispatch engine 356. DER dispatch engine 356 executes economic dispatch for the distributed energy resources 145 managed by DER management system 140. Economic dispatch refers to the operation of generation resources to produce energy at the lowest cost to reliably serve consumers, recognizing any operational limits of generation and transmission resources. DER dispatch engine 356 may execute economic dispatch for distributed energy resources 145, which may be referred to herein as "DER dispatch," based on DER data 352 and/or operation status 354, as well as the output of P-OPF module 340. This DER dispatch may be executed in real time (e.g., as data are collected), periodically (e.g., according to the same time interval as the P-OPF analysis), and/or in response to a triggering event (e.g., user operation). The output of the DER dispatch of DER dispatch engine 356 may be one or more control parameters for each of distributed energy resource(s) 145.

The DER dispatch, executed by DER dispatch engine 356 of each DER management system 140, may be constrained or otherwise based on the operating range(s) received from P-OPF module 340 of management system 110. In other words, DER dispatch engine 356 may execute the DER dispatch for the distributed energy resource(s) 145, being managed by the respective DER management system 140, based on the operating range, sent by management system 110 of the power network, for each of the distributed energy resource(s) 145 being managed by the respective DER management system 140. In an embodiment, the execution of the DER dispatch comprises, for each of the distributed energy resource(s) 145 being managed by the respective DER management system 140, adding a constraint to the DER dispatch that constrains operation of that distributed energy resource 145 to the operating range, sent by management system 110, for that distributed energy resource 145.

As a result of the DER dispatch being based on the operating range(s) produced by the P-OPF analysis in P-OPF module 340 of management system 110, the DER dispatch will at least be biased towards outputting control parameter(s) that are within the operating range(s). In the event that constraints are used, the constraints will ensure that the control parameter(s), output by the DER dispatch, are within the operating range(s).

In an embodiment in which the output of P-OPF module 340 also comprises a list of the most sensitive distributed energy resources 145, the DER dispatch, executed by DER dispatch engine 356, may also be based on this list. In particular, DER dispatch engine 356 may add constraints to the DER dispatch for just the distributed energy resources 145 in the list, add additional constraints to the DER dispatch for the distributed energy resources 145 in the list, or otherwise include one or more special considerations for the distributed energy resources 145 in the list.

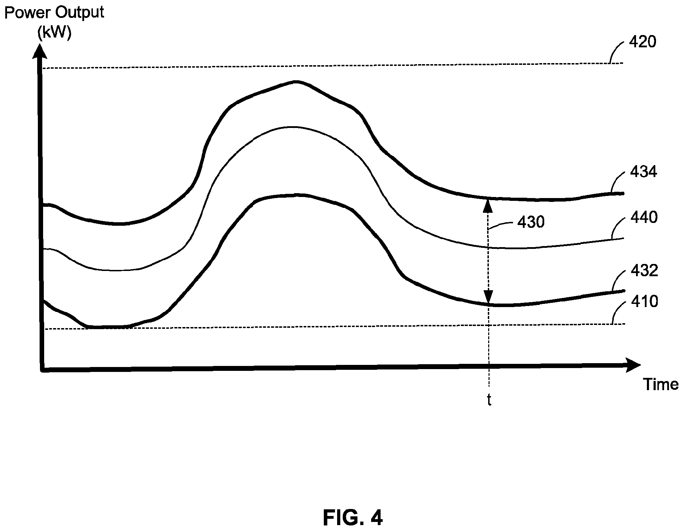

FIG. 4 illustrates a graph of an operating range, output by P-OPF analysis for a distributed energy resource 145, overlaid with the actual dispatched power output of the distributed energy resource 145, according to an example. Distributed energy resource 145 has a minimum power output limit 410, representing the minimum amount of power that distributed energy resource 145 can output, and a maximum power output limit 420, representing the maximum amount of power that distributed energy resource 145 can output. The operating range 430, output by the P-OPF analysis, for each time interval t, is defined by a lower bound 432 (e.g., representing a minimum scenario-specific value) and an upper bound 434 (e.g., representing a maximum scenario-specific value). Operating ranges 430 may be defined for a plurality of time points or intervals to define a curve of lower bound 432 and upper bound 434 to the power output of distributed energy resource 145 over time. It is contemplated that, the DER dispatch, which is constrained by or otherwise based on operating ranges 430, will output a control parameter 440 of the power output, for each time interval t, that is within the operating range 430 for that time interval t. As illustrated, during execution of the DER dispatch by DER management system 140, control parameter 440 never drops below lower bound 432 and never exceeds upper bound 434. It should be understood that a similar graph could be plotted for an operating range that represents power consumption by a distributed energy resource 145.

DER dispatch engine 356 may output the control parameter(s) to a control module 370 of DER management system 140. Control module 370 may control the distributed energy resource(s) 145, being managed by the respective DER management system 140, according to the control parameter(s) output by the DER dispatch executed by DER dispatch engine 356. In particular, control module 370 may translate the control parameter(s) into one or more control commands that are then sent to the respective distributed energy resources 145. For example, the control parameter(s) may comprise a power generation setpoint for each distributed energy resource 145 that is a power generator and/or a power consumption limit for each distributed energy resource 145 that is a power consumer. In this case, controlling the distributed energy resource(s) 145 may comprise operating the distributed energy resource(s) 145 according to the power generation setpoint(s) or power consumption limit(s).

4. <u>Example Operation of Management System</u>

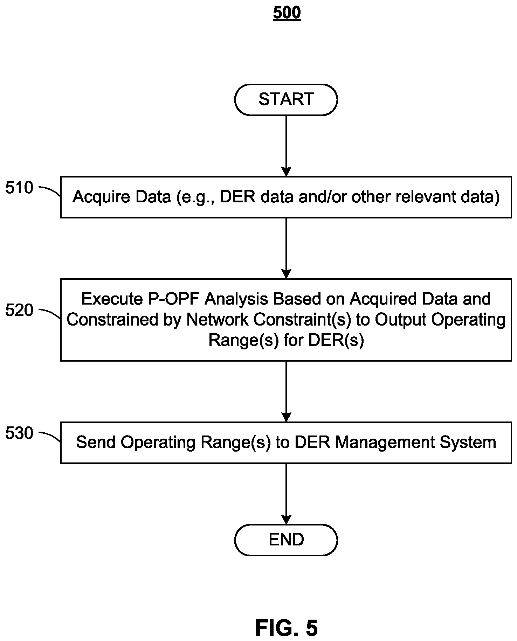

FIG. 5 illustrates an example process 500 for P-OPF analysis, representing operation of management system 110, according to an embodiment. Process 500 may be implemented by software 112 on management system 110, which may comprise or consist of an advanced distribution management system. While process 500 is illustrated with a certain arrangement and ordering of subprocesses, process 500 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 510, the data used by P-OPF module 340 are acquired. The acquired data may comprise network data 312, forecast data 314, and/or historical data 316, which may be acquired by network manager interface 310, as well as DER data 352 and/or operation status 354, which may be acquired by P-OPF module 340 from DER interface 350.

In subprocess 520, the P-OPF analysis may be executed on a model of the power network, based on the data, acquired in subprocess 510, and constrained by one or more constraints on the operation of the power network, being managed by management system 110, to output an operating range for each of one or more distributed energy resources 145 being managed by at least one DER management system 140, and optionally a list of the most sensitive distributed energy resources 145. Subprocess 520 may be performed by P-OPF module 340, with the assistance of uncertainty model generation module 320 and scenario generation module 330. In particular, uncertainty model generation module 320 may generate a joint probability distribution from relevant data, including network data 312, forecast data 314, and/or historical data 316, and scenario generation module 330 may generate a plurality of scenarios (e.g., set $\Omega$) from the joint probability distribution. P-OPF module 340 may execute the P-OPF analysis on the model of the power network, based on network data 312, forecast data 314, the plurality of scenarios output by scenario generation module 330, DER data 352, and/or operation status 354, to produce a set of one or more operating ranges that will ensure that the operation of the power network does not violate one or more network constraint(s).

In subprocess 530, the output of P-OPF module 340, which may include operating range(s) and optionally the list of the most sensitive distributed energy resources 145, may be sent to each DER management system 140. In particular, P-OPF module 340 may send the operating range(s), and optionally the list of the most sensitive distributed energy resources 145, to DER dispatch engine 356 of DER interface 350 of each DER management system 140. Subprocess 530 may be performed by P-OPF module 340. It should be understood that management system 110 may compute and send operating ranges, computed by P-OPF module 340, to each DER management system 140 that manages distributed energy resources 145, for each distributed energy resource 145 that the DER management system 140 manages and which injects power into the power network managed by management system 110. P-OPF module 340 may operate to compute and send the operating range(s), and optionally the list of the most sensitive distributed energy resources 145, to each DER management system 140 according to the time resolution of the DER dispatch, performed by DER dispatch engine 356, of that DER management system 140. It should be understood that the time resolutions may be the same or different for different DER management systems 140.

Process 500 may be executed iteratively in advance of a sliding future time window, comprising one or more time points or time intervals. In particular, an iteration of process 500 may be executed after the expiration of each of a plurality of time steps for a future time window that may slide according to the same time step. The length of the time window may be one minute, five minutes, ten minutes, fifteen minutes, thirty minutes, one hour, several hours, twelve hours, twenty-four hours, several days, or any other suitable time period. The length of the time step may be the same as or different from the length of the time window, and may also be one minute, five minutes, ten minutes, fifteen minutes, thirty minutes, one hour, several hours, twelve hours, twenty-four hours, several days, or any other suitable time period. Similarly, the lead time between the execution of process 500 and the future time window may be the same as or different from the length of the time step, and may be zero minutes, one minute, five minutes, ten minutes, fifteen minutes, thirty minutes, one hour, several hours, twelve hours, twenty-four hours, several days, or any other suitable time period. For example, process 500 may be executed one day in advance for a future time window that is one day in length (e.g., with time intervals of five minutes, ten minutes, fifteen minutes, thirty minutes, one hour, etc.) and that slides according to a time step that is one day in length or one time interval in length. Alternatively or additionally, process 500 may be executed manually or in response to a different automated trigger.

5. <u>Example Operation of Management System</u>

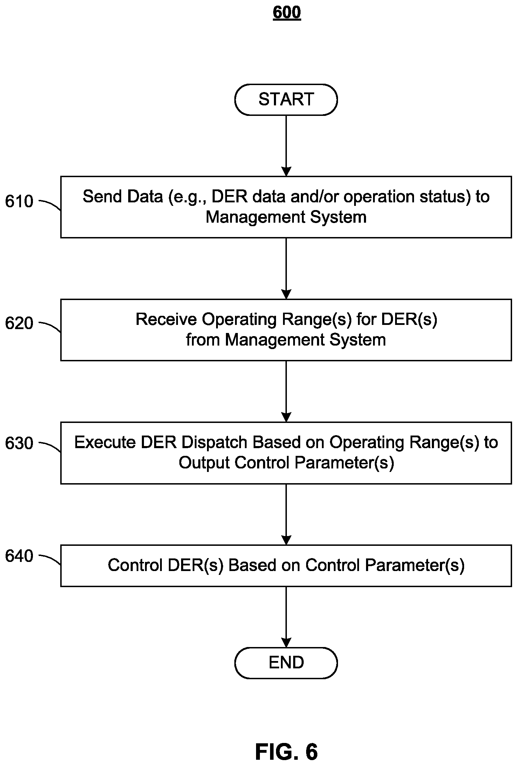

FIG. 6 illustrates an example process 600 for DER dispatch, representing operation of DER management system 140, according to an embodiment. Process 600 may be implemented by DER interface 350 on DER management system 140. While process 600 is illustrated with a certain arrangement and ordering of subprocesses, process 600 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 610, data may be sent to management system 110. In particular, DER interface 350 may send DER data 352 and/or operation status 354 to P-OPF module 340 of management system 110. As discussed elsewhere herein, the data may be pushed by DER interface 350 to P-OPF module 340 or pulled by P-OPF module 340 from DER interface 350. In any case, the data may be sent at the same time resolution at which P-OPF module 340 and DER dispatch engine 356 are executed.

In subprocess 620, an operating range is received, from management system 110, for each distributed energy resource 145 being managed by DER management system 140. In particular, DER dispatch engine 356 may receive the operating range(s) from P-OPF module 340 of management system 110. The operating range(s) may be pulled by DER dispatch engine 356 from P-OPF module 340 or pushed by P-OPF module 340 to DER dispatch engine 356. In any case, each operating range may represent the range of power output or consumption to which a respective distributed energy resource 145 should be constrained to ensure that the operation of the power network does not violate applicable network constraints. In an embodiment, a list of the most sensitive distributed energy resources 145 may also be received in subprocess 620.

In subprocess 630, the DER dispatch for a time point or future time period is executed for each distributed energy resource 140, being managed by DER management system 140, based on the operation range, sent by management system 110, for each distributed energy resource 145. In particular, DER dispatch engine 356, may, when executing the DER dispatch, for each distributed energy resource 145, add a constraint to the DER dispatch that constrains the operation of that distributed energy resource 145 to the operating range received for that distributed energy resource 145. In an embodiment in which the output of P-OPF module 340 comprises a list of the most sensitive distributed energy resources 145, the DER dispatch may also be based on the list of the most sensitive distributed energy resources 145. The DER dispatch outputs one or more control parameters for each distributed energy resource 145 managed by DER management system 140.

In subprocess 640, the distributed energy resources 145, managed by DER management system 140, may be controlled based on the control parameters. In particular, DER dispatch engine 356 may output the control parameters to a control module 370, which may translate the control parameters into one or more control commands for each distributed energy resource 145, and send each set of control command(s) to the respective distributed energy resource 145. For example, the control parameters may comprise a power generation setpoint for a distributed energy resource 145, and the control may comprise operating the distributed energy resource 145 to output power according to the power generation setpoint. As another example the control parameters may comprise a power consumption limit for a distributed energy resource 145, and the control may comprise operating the distributed energy resource 145 so as not to exceed the power consumption limit.

Process 600 may be executed iteratively in the same manner as process 500. In particular, an iteration of process 600 may be executed after the expiration of each of a plurality of time steps for a future time window that may slide according to the same time step. Each iteration of process 600 may be staggered in time with a corresponding iteration of process 500, such that there is sufficient time for the operating range(s) to be computed by subprocess 520 and sent by subprocess 530 in process 500, prior to being received by subprocess 620 in process 600. It should be understood that the amount of staggering defines the limited time frame in which P-OPF module 340 must complete the P-OPF analysis for each future time window. Alternatively or additionally, process 600 may be executed manually or in response to a different automated trigger.

6. Example Application

Management system 110 has complete knowledge of the power network, and therefore, can execute OPF analysis to calculate optimal operating decisions for the power network. DER management systems 140 are responsible for controlling distributed energy resources 145 in a manner that is in the best interest of the owner(s) of those distributed energy resources 145. In the state of the art, the control by DER management systems 140 is not informed by the OPF analysis of management system 110. In addition, DER management systems 140 do not have a model of the power network, and therefore, are unable to account for constraints on the power network.

Disclosed embodiments solve this gap between management system 110 and DER management systems 140 by utilizing P-OPF analysis, at management system 110, to produce operating ranges and optionally a list of the most sensitive distributed energy resources 145, which can then be incorporated into the DER dispatch executed by DER management systems 140. Since management system 110 has complete knowledge of the power network, management system 110 is able to incorporate network constraints into the P-OPF analysis, to ensure safe operating ranges. The P-OPF analysis may also factor in the model of the power network and any DER constraints. In addition, management system 110 is able to account for any number of uncertainty streams (e.g., load and/or renewable-energy generation) in the data using a plurality of scenarios to convert ordinary optimal power flow into probabilistic optimal power flow. Essentially, management system 110 is able to transfer knowledge about the power network and uncertainty streams to DER management systems 140 via the operating ranges. This enables the operation planning of management system 110 to be integrated with the DER dispatch of DER management systems 140, despite the distributed nature of management system 110 and DER management systems 140, which may be operated by different operators and stakeholders.

Notably, using disclosed embodiments, few to no changes are required at the DER management systems 140. In particular, each DER management system 140 may continue to execute the same DER dispatch as before, but with the addition of the operating ranges to the DER dispatch. For example, the operating ranges may be incorporated into the DER dispatch as additional constraints on the DER dispatch or in any other manner that is suitable to the operator of the DER management system 140. In an embodiment in which P-OPF module 340 outputs a list of the most sensitive distributed energy resources 145, the DER dispatch may be further based on this list. Thus, disclosed embodiments are minimally invasive to the DER management systems 140, while providing the DER management systems 140 with information related to network constraints on the power network and flexibility as to how to incorporate that information into the DER dispatch, such that the overall power network can be operated safely and securely with less congestion, fewer violations, fewer outages, and the like.

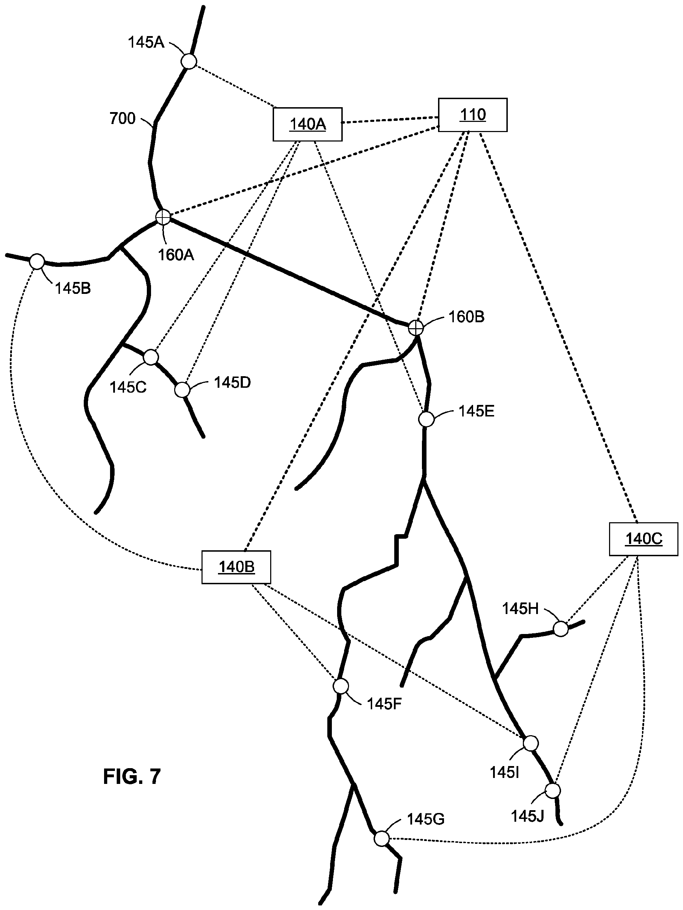

FIG. 7 illustrates an example environment in which disclosed embodiments may operate, according to an embodiment. In this example, management system 110, which may be an advanced distribution management system, manages a power network 700, such as a distribution network, which comprises substations 160A and 160B. In this case, management system 110 is a cloud-based platform that communicates with substations 160A and 160B (e.g., over network(s) 120) for system protection and/or configuration. Alternatively, management system 110 could be locally hosted in substation 160A and/or 160B.

Each DER management system 140 manages at least one distributed energy resource 145, and generally a plurality of distributed energy resources 145. In this example, DER management system 140A manages distributed energy resources 145A, 145C, 145D, and 145E, DER management system 140B manages distributed energy resources 145B, 145F, and 145I, and DER management system 140C manages distributed energy resources 145G, 145H, 145J, and 145J. It should be understood that a given DER management system 140 may manage any arbitrary set of distributed energy resources 145 on the power network. Each DER management system 140 generally aggregates the power capacity of the respectively managed distributed energy resources 145 for participation in an energy market (e.g., to sell power generation into the energy market, purchase power consumption from the energy market, etc.). Thus, the goal of DER dispatch in DER management system 140 is generally to maximize a financial benefit, as opposed to ensuring secure and optimized operation of power network 700.

Management system 110 communicates with DER management systems 140A, 140B, and 140C (e.g., over network 120). In particular, each DER management system 140 may send DER data 352 and/or operation status 354 to management system 110, and management system 110 may return operating ranges for distributed energy resources 145 to the respective DER management system 140 that manages those distributed energy resources 145. For instance, management system 110 may acquire data for distributed energy resources 145A, 145C, 145D, and 145E from DER management system 140A, acquire data for distributed energy resources 145B, 145F, and 145I from DER management system 140B, and acquire data for distributed energy resources 145G, 145H, and 145J from DER management system 140C. Management system 110 may utilize the data to execute the P-OPF analysis, based on the acquired data for all of distributed energy resources 145A-145J, and then return the resulting operating ranges for distributed energy resources 145A, 145C, 145D and 145E to DER management system 140A, return the resulting operating ranges for distributed energy resources 145B, 145F, and 145I to DER management system 140B, and return the resulting operating ranges for distributed energy resources 145G, 145H, and 145J to DER management system 140C.

Each DER management system 140 performs DER dispatch and controls its respective distributed energy resources 145 in accordance with its respective DER dispatch. It should be understood that the DER dispatch of one DER management system 140 may be independent of the DER dispatch of another DER management system 140. Each DER management system 140 is free to execute its own DER dispatch and utilize the operating ranges in that DER dispatch in whatever manner is desired. For example, DER management system 140A performs first DER dispatch and controls distributed energy resources 145A, 145C, 145D and 145E in accordance with the first DER dispatch, DER management system 140B performs second DER dispatch and controls distributed energy resources 145B, 145F, and 145I in accordance with the second DER dispatch, and DER management system 140C performs third DER dispatch and controls distributed energy resources 145G, 145H, and 145J in accordance with the third DER dispatch. It should be understood that the first, second, and third DER dispatches may have different objectives, be executed in different manners, and/or the like.

Advantageously, despite the distributed nature of management system 110 and DER management systems 140 and the fact that these distributed systems may be under the control of different operators and that distributed energy resources 145 may be behind the meter (e.g., privately owned), information about the network constraints on power network 700 are incorporated into the DER dispatch and resulting control of each distributed energy resource 145, via the operating ranges output by P-OPF module 340 of management system 110. Thus, DER management systems 140 may operate their respective distributed energy resources 145 in any manner and without knowledge of the network constraints on power network 700, while nevertheless ensuring that those network constraints are not violated.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1. A method comprising using at least one hardware processor of a management system of a power network to:

   acquire distributed energy resource (DER) data for one or more distributed energy resources;
   execute a probabilistic optimal power flow (P-OPF) analysis on a model of the power network, based on at least the DER data and constrained by one or more constraints on operation of the power network, wherein the P-OPF analysis outputs an operating range for each of the one or more distributed energy resources; and
   send the operating range, output by the P-OPF analysis, for each of the one or more distributed energy resources to at least one DER management system that is external to the management system of the power network.

2. The method of Claim 1, wherein the management system of the power network is an advanced distribution management system.

3. The method of any one of the preceding claims, wherein the power network comprises a distribution network.

4. The method of any one of the preceding claims, wherein the P-OPF analysis is executed using a plurality of scenarios, and wherein the method further comprises using the at least one hardware processor of the management system of the power network to:

   acquire relevant data for the power network, wherein the relevant data comprise one or more of network data, historical data, or forecast data;
   generate a joint probability distribution from the relevant data; and
   generate the plurality of scenarios based on the joint probability distribution.

5. The method of Claim 4, wherein the joint probability distribution is generated using:

   parametric modeling of uncertainty; or
   non-parametric modeling of uncertainty in the relevant data.

6. The method of Claim 4, wherein generating the joint probability distribution comprises applying correlation analysis to the relevant data.

7. The method of any one of the preceding claims, wherein the P-OPF analysis is further based on:

   network data, which identify a plurality of assets in the power network and one or more connections between the plurality of assets; and/or
   one or more forecasted parameters, wherein, preferably, the one or more forecasted parameters comprise one or both of at least one weather parameter or at least one load parameter.

8. The method of any one of the preceding claims, wherein the DER data are acquired from the at least one DER management system.

9. The method of any one of the preceding claims, further comprising using at least one hardware processor of the at least one DER management system to execute a DER dispatch for the one or more distributed energy resources based on the operating range, sent by the management system of the power network, for each of the one or more distributed energy resources, wherein the DER dispatch outputs one or more control parameters for each of the one or more distributed energy resources.

10. The method of Claim 9, wherein executing the DER dispatch comprises, for each of the one or more distributed energy resources, adding a constraint to the DER dispatch that constrains operation of that distributed energy resource to the operating range, sent by the management system of the power network, for that distributed energy resource.

11. The method of either Claim 9 or 10, further comprising using the at least one hardware processor of the at least one DER management system to control the one or more distributed energy resources according to the one or more control parameters output by the DER dispatch.

12. The method of Claim 11, wherein the one or more control parameters comprise a power generation setpoint for at least one of the one or more distributed energy resources, and wherein controlling the at least one distributed energy resource comprises operating the at least one distributed energy resource according to the power generation setpoint.

13. The method of any one of the preceding claims, wherein the P-OPF analysis optimizes:

an objective function that represents congestion in the power network; and/or
an objective function that represents overloading in the power network; and/or
an objective function that represents one or both of over-voltage or under-voltage in the power network.

14. A management system of a power network, the management system comprising:

at least one hardware processor; and
software configured to, when executed by the at least one hardware processor, perform the method of any one of the preceding claims.

15. A non-transitory computer-readable medium having instructions stored thereon, wherein the instructions, when executed by a processor of a management system of a power network, cause the processor to perform the method of any one of the preceding claims.

Management System
110

Software
112

Database
114

DER(s)
145A

DERMS
140A

DER(s)
145B

DERMS
140B

DER(s)
145N

DERMS
140N

Network(s)
120

User System
130

Third-Party System
150

Substation
160

**FIG. 1**

**200**

Processor
210

Main Memory
215

I/O Interface
235

Communication
Interface 240

Secondary
Memory 220

Internal Medium
225

Removable
Medium
230

255

External System
245

250

Baseband
260

Radio
265

Antenna
270

Communication Bus
205

**FIG. 2**

**FIG. 3**

**FIG. 4**

<u>**500**</u>

```
        ┌──────────┐
        │  START   │
        └────┬─────┘
             │
             ▼
510 ┌────────────────────────────────────────────────────────┐
    │  Acquire Data (e.g., DER data and/or other relevant data) │
    └────────────────────────┬───────────────────────────────┘
                             │
                             ▼
520 ┌────────────────────────────────────────────────────────┐
    │  Execute P-OPF Analysis Based on Acquired Data and       │
    │  Constrained by Network Constraint(s) to Output Operating│
    │  Range(s) for DER(s)                                     │
    └────────────────────────┬───────────────────────────────┘
                             │
                             ▼
530 ┌────────────────────────────────────────────────────────┐
    │  Send Operating Range(s) to DER Management System        │
    └────────────────────────┬───────────────────────────────┘
                             │
                             ▼
                        ┌──────────┐
                        │   END    │
                        └──────────┘
```

**FIG. 5**

<u>600</u>

START

610 — Send Data (e.g., DER data and/or operation status) to Management System

620 — Receive Operating Range(s) for DER(s) from Management System

630 — Execute DER Dispatch Based on Operating Range(s) to Output Control Parameter(s)

640 — Control DER(s) Based on Control Parameter(s)

END

**FIG. 6**

**FIG. 7**

Europäisches
Patentamt
European
Patent Office
Office européen
des brevets

**EUROPEAN SEARCH REPORT**

Application Number

EP 24 18 3316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/065792 A1 (YONEZAWA MINORU [JP] ET AL) 15 March 2012 (2012-03-15) * paragraphs [0098] - [0220]; figures 1-14,21 * | 1-15 | INV. H02J3/00 H02J3/38 |
| X | US 2022/239108 A1 (HAMADA SHIGETAKA [JP] ET AL) 28 July 2022 (2022-07-28) * paragraphs [0035] - [0107]; figures 1-7 * | 1-15 | |
| A | US 2017/163039 A1 (SCHWARZ MAJA [DE] ET AL) 8 June 2017 (2017-06-08) * the whole document * | 1-15 | |
| A | US 2023/261467 A1 (FIFE JOHN MICHAEL [US] ET AL) 17 August 2023 (2023-08-17) * the whole document * | 1-15 | |

TECHNICAL FIELDS
SEARCHED (IPC)

H02J

The present search report has been drawn up for all claims

| Place of search | Date of completion of the search | Examiner |
|---|---|---|
| Munich | 26 November 2024 | Hunckler, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3316

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2024

| Patent document cited in search report | | | Publication date | Patent family member(s) | | Publication date |
|---|---|---|---|---|---|---|
| US 2012065792 | A1 | | 15-03-2012 | JP | 5101675 B2 | 19-12-2012 |
| | | | | JP | 2012060789 A | 22-03-2012 |
| | | | | US | 2012065792 A1 | 15-03-2012 |
| US 2022239108 | A1 | | 28-07-2022 | CN | 114825321 A | 29-07-2022 |
| | | | | EP | 4037129 A1 | 03-08-2022 |
| | | | | JP | 7512916 B2 | 09-07-2024 |
| | | | | JP | 2022115359 A | 09-08-2022 |
| | | | | US | 2022239108 A1 | 28-07-2022 |
| US 2017163039 | A1 | | 08-06-2017 | EP | 3152810 A1 | 12-04-2017 |
| | | | | JP | 2018508901 A | 29-03-2018 |
| | | | | US | 2017163039 A1 | 08-06-2017 |
| | | | | WO | 2016141952 A1 | 15-09-2016 |
| US 2023261467 | A1 | | 17-08-2023 | US | 2020004212 A1 | 02-01-2020 |
| | | | | US | 2020006944 A1 | 02-01-2020 |
| | | | | US | 2023261467 A1 | 17-08-2023 |
| | | | | US | 2024313545 A1 | 19-09-2024 |

EPO FORM P0459

For more details about this annex : see Official Journal of the European Patent Office, No. 12/82